(19) Europäisches Patentamt

European Patent Office

Office européen des brevets

(11) EP 1 284 651 B1

(12) EUROPEAN PATENT SPECIFICATION

(45) Date of publication and mention
of the grant of the patent:
**13.10.2004 Bulletin 2004/42**

(51) Int Cl.⁷: **A61B 5/117**, G06K 9/26,
G06T 7/20, G03G 15/36

(21) Application number: **01926275.7**

(22) Date of filing: **24.04.2001**

(86) International application number:
**PCT/SE2001/000869**

(87) International publication number:
**WO 2001/087159 (22.11.2001 Gazette 2001/47)**

(54) **A COMPOSITE IMAGE GENERATING METHOD, AND A FINGERPRING DETECTION APPARATUS**

VERFAHREN ZUR HERSTELLUNG EINES KOMBINATIONSBILDES UND FINGERABDRUCKDETEKTIONSGERÄT

PROCEDE DE GENERATION D'UNE IMAGE COMPOSITE, ET APPAREIL DE DETECTION D'UNE EMPREINTE DIGITALE

(84) Designated Contracting States:
**AT BE CH CY DE DK ES FI FR GB GR IE IT LI LU MC NL PT SE TR**
Designated Extension States:
**AL LT LV MK RO SI**

(30) Priority: **15.05.2000 SE 0001761**

(43) Date of publication of application:
**26.02.2003 Bulletin 2003/09**

(73) Proprietor: **Telefonaktiebolaget LM Ericsson (publ)**
**164 83 Stockholm (SE)**

(72) Inventor: **BENCKERT, Henrik**
**S-222 24 Lund (SE)**

(74) Representative: **Karlsson, Leif Karl Gunnar et al**
**Ström & Gulliksson IPC AB,**
**P.O. Box 793**
**220 07 Lund (SE)**

(56) References cited:
**EP-A1- 0 813 164**　　　　**WO-A1-99/43258**
**US-A- 4 933 976**　　　　**US-A- 5 864 296**

- **DATABASE WPI Week 200008, Derwent Publications Ltd., London, GB; AN 1998-511591, XP002946352 & JP 2 999 970 B2 (XU W X) 17 January 2000**
- **ELSEY J.C.: 'A technique for image registration and motion detection', 1989, CONFERENCE RECORD, TWENTY-THIRD ASILOMAR CONFERENCE ON SIGNALS, SYSTEMS & COMPUTERS, SAN JOSE, CA, USA, MAPLE PRESS, USA pages 829 - 833, XP002946351**

## Description

## Technical Field

Generally speaking, the present invention relates to the field of biometrics, i.e. identification of an individual based on his/her physiological or behavioral characteristics. More specifically, the present invention relates to a method of generating a composite image from a sequence of partial image frames, which represent different but at least partially overlapping areas of a body-specific pattern, such as a fingerprint.

The invention also relates to a fingerprint detection apparatus of the type having a fingerprint sensor, which is adapted to produce a sequence of at least partially overlapping fingerprint frames, when a finger is moved in relation to the fingerprint sensor, and furthermore having a processing device, which is coupled to the fingerprint sensor and is adapted to produce a complete fingerprint image by determining relative displacements between respective fingerprint frames and combining the fingerprint frames accordingly.

## Prior Art

Fingerprint-based biometrics systems are used in various applications for identifying an individual user or verifying his/her authority to perform a given act, to access a restricted area, etc. Fingerprint identification is a reliable biometrics technique, since no two fingerprints from different individuals have the same body-specific pattern of ridges and valleys. Furthermore, the fingerprint pattern of an individual remains unchanged throughout life.

Some fingerprint detection systems operate by capturing a complete image of a fingerprint in one step; the surface of the finger is recorded by e.g. capturing a grayscale photographic picture, which subsequently may be analyzed through image processing methods in order to determine whether or not the captured fingerprint corresponds to prestored reference data.

Other fingerprint detection systems do not produce the entire fingerprint image in just one step. Instead, the surface of the finger is scanned, producing a sequence of fingerprint frames or "slices", which are combined into a composite image representing the entire fingerprint. EP-A2-0 929 050 discloses a scanning capacitive semiconductor fingerprint detector, which includes an array of capacitive sensing elements. When a user moves his/her finger across the scanning array, a sequence of partial fingerprint frames are produced by the capacitive sensing elements. The partial fingerprint frames are assembled into a composite fingerprint image.

EF-A1-0 813 164 relates to a reading system for digital fingerprints, comprising a sensor in the form of a bar, which is wider than the typical width of a finger but is relatively narrow compared to the length of the finger. The sensor is an integrated circuit with an active layer, which is sensitive to pressure and/or temperature. When a user moves his/her finger across the sensor, the sensor will scan the fingerprint and deliver a sequence of fingerprint frames, each having a size essentially corresponding to the sensitive area of the sensor and being partially overlapping. A processing unit receives the sequence of fingerprint frames from the sensor and is adapted to reconstruct a complete fingerprint image. Once the complete fingerprint image has been obtained, it may be compared with a reference image, which is stored on e.g. a smart card, in order to authenticate the holder of the smart card.

Fingerprint sensors of the above type, which provide a sequence of partially overlapping fingerprint frames, have several advantages, particularly in the field of miniaturized or portable electronic devices. A moderate cost and a low power consumption, together with a small mounting area requirement, are important advantages in this respect. However, miniaturized or portable electronic devices often have a limited data processing capacity; both the data processor (CPU) and the electronic memories used therein are adapted to portable use and consequently do not have as excellent performance as for instance some stationary installations.

To combine a sequence of partially overlapping fingerprint frames into a composite image representing the whole of a fingerprint is a computationally intensive operation. In order to assemble the composite fingerprint image from a number of successive fingerprint frames, a displacement vector between each pair of frames must be calculated. The standard method is to use autocorrelation, wherein a first fingerprint frame and a succeeding second frame are read and an output image or correlation map is produced in displacement coordinate space. The correlation map normally contains a global maximum at a point corresponding to the displacement vector.

More specifically, in the case of digital grayscale fingerprint frames, two two-dimensional arrays of integers numbers are supplied to the autocorrelation procedure, which outputs one two-dimensional array of integers, where these integer numbers can be illustrated as grayscale intensities. As already mentioned, autocorrelation is computationally intensive and is hard to perform in real time with a data processor, which is optimized for low power consumption and miniaturized or portable applications. Furthermore, the computational effort grows quadratically with the size of the computational area.

## Summary of the Invention

In view of the above problems, an object of the invention is to facilitate the production of a composite image, representing a body-specific pattern such as a fingerprint, from a sequence of at least partially overlapping image frames in real time by using much less power than conventional methods, thereby allowing small sensors (which are not capable of producing a complete image in one step) to be used in miniaturized or portable applications.

This object is achieved by a method and an apparatus according to the attached independent patent claims. More specifically, a composite image may be produced from a sequence of at least partially overlapping image frames by performing the following steps for the sequence of image frames. A predetermined number of subareas (which can be as small as 1x1 pixel) are selected in a first image frame. For each of these subareas, a correlation with a second image frame, succeeding the first image frame, is determined. A linear combination of the correlations for all subareas are then calculated, and finally, from the calculated linear combination, the displacement between the first and second image frames is determined. Once the displacement is known, the first and second image frames may be correctly assembled. By repeating the above procedure, a composite fingerprint image, etc, may be stepwise assembled.

The object is also achieved by a fingerprint detection apparatus, which has a fingerprint sensor adapted to produce a sequence of at least partially overlapping fingerprint frames, and a processing device, which is adapted to perform the above method.

Other objects, features and advantages of the present invention will appear from the following detailed disclosure, from the attached subclaims as well as from the drawings.

## Brief Description of the Drawings

A preferred embodiment of the present invention will now be described in more detail, reference being made to the enclosed drawings, in which:

FIG 1 is a schematic view of a portable electronic device, in the form of a mobile telephone, in which the fingerprint detection method and apparatus according to the invention may be used,

FIG 2 illustrates the overall operation principle of a scanning-type fingerprint sensor, which produces a sequence of partially overlapping fingerprint frames,

FIG 3 is a block diagram, which illustrates the essential components of the mobile telephone illustrated in FIG 1,

FIG 4 is a flowchart diagram, which illustrates the steps of the method according to the preferred embodiment,

FIG 5 illustrates a sequence of partially overlapping fingerprint frames and the operations made during a pre-processing phase of the method according to the preferred embodiment,

FIG 6 is an enlarged view of a part of a fingerprint frame and illustrates the operations made for that frame during an autocorrelation phase of the method,

FIG 7 illustrates a correlation map as a result of aforesaid autocorrelation, and

FIG 8 illustrates how individual correlation maps are put together in a linear combination so as to generate a total correlation map, from which the displacement vector is determined.

## Detailed Disclosure

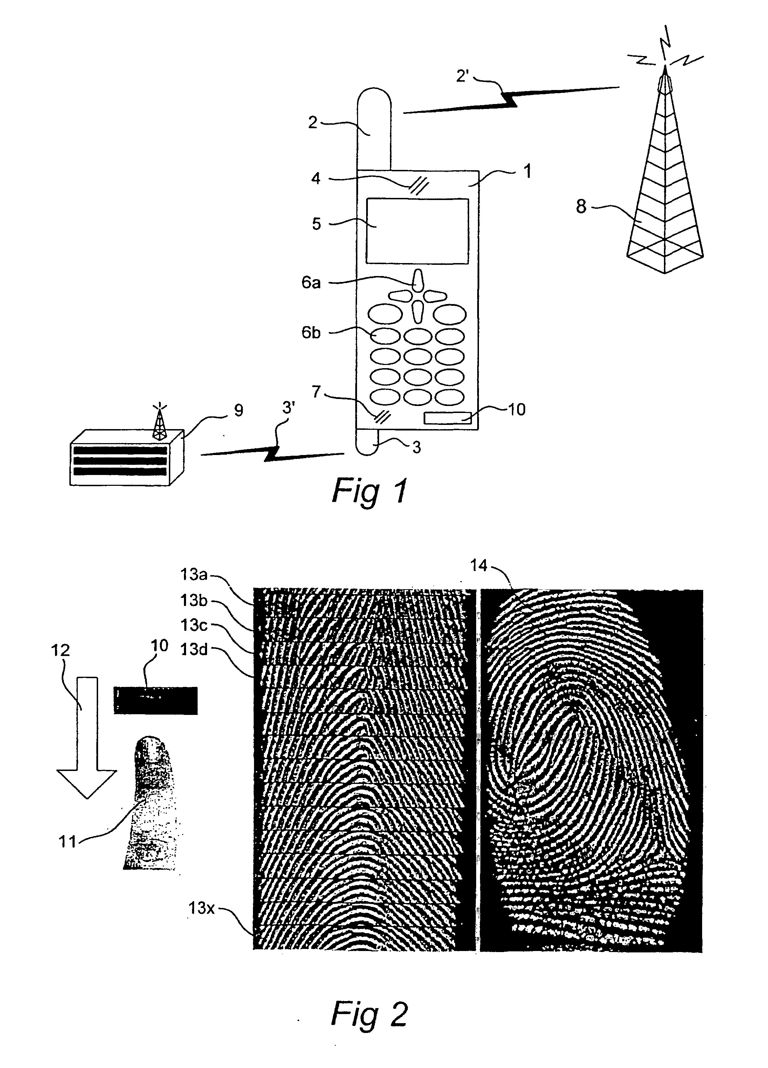

In FIG 1 there is shown a portable electronic device in a form of a mobile telephone 1. The mobile telephone 1 will be used as an example, in a non-limiting sense, of one possible portable application, in which the method and apparatus of the invention may be used. The mobile telephone 1 comprises a first antenna 2, which is adapted to establish and maintain a first radio-olink 2' to a base station 8 in a mobile telecommunications system, such as GSM ("Global System for Mobile communications"). The telephone 1 also has a second antenna 3, which is used for communicating with a remote device 9 over a second radio link 3'. The second antenna 3 may for instance be adapted for Bluetooth or another kind of short-range supplementary data communication, e.g. on the 2.4 GHz ISM band ("Industrial, Scientific and Medical").

As any other contemporary mobile telephone, the telephone 1 comprises a loudspeaker 4, a display 5, a set of cursor keys 6a, a set of alphanumeric keys 6b and a microphone 7. In addition to this, the telephone 1 also comprises a fingerprint sensor 10, which forms a part of the fingerprint detection apparatus according to the invention and is used by the method according to the invention.

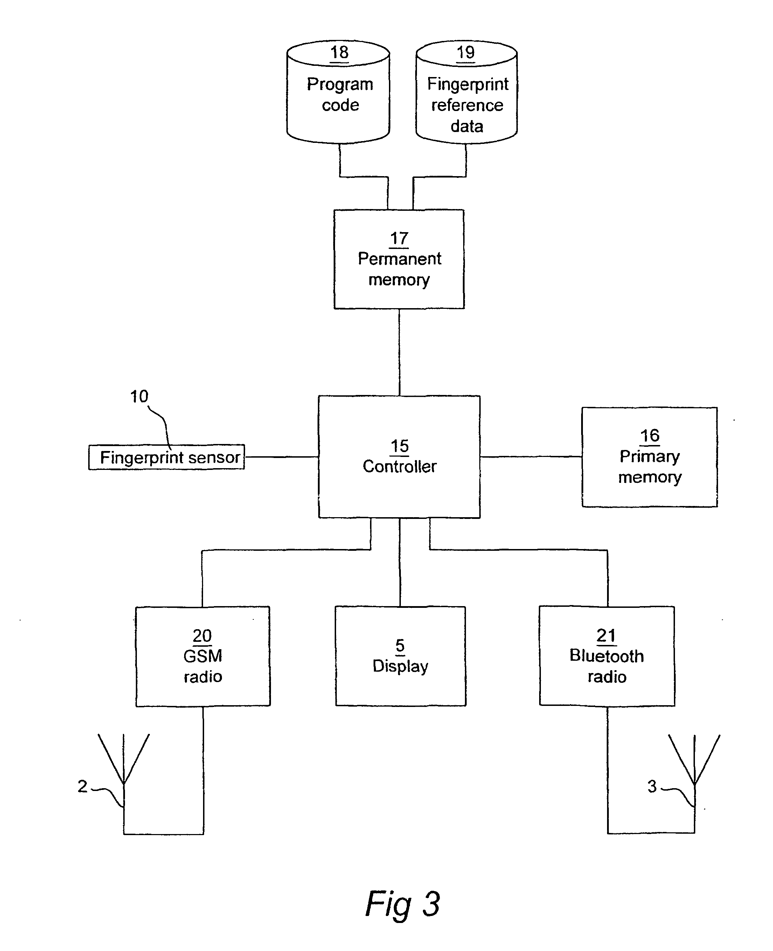

According to the preferred embodiment, the fingerprint sensor 10 is a thermal silicon chip fingerprint sensor called FingerChip™, which is commercially available from Thomson-CSF Semiconducteur Specifiques, Route Départementale 128, BP 46, 91 401 Orsay Cedex, France. The FingerChip™ fingerprint sensor uses the heat generated by the finger in order to produce an eight-bit, 500 dpi grayscale image of a fingerprint. The imaging surface of the FingerChip™ sensor measures 1.5 mm x 14 mm. When a finger 11 is moved in a direction 12 across the fingerprint sensor 10 (see FIG 2), the sensor 10 produces a sequence of partially overlapping fingerprint frames 13a, 13b, ..:, 13x every 20 ms, each frame representing an area approximately equal to the imaging surface mentioned above. The frames are supplied to a data processor/controller 15 of the mobile telephone 1 (see FIG 3). The data processor/controller 15 will then produce a composite fingerprint image 14, as will be described in more detail later.

Alternatively, virtually any other commercially available fingerprint sensor may be used, such as an optical sensor, a capacitive sensor, etc, as long as such a sensor is capable of producing a sequence of partially overlapping fingerprint frames, as described above.

As shown in FIG 3, the mobile telephone 1 comprises the data processor/controller 15, which as already mentioned is connected to the fingerprint sensor 10. The data processor/controller 15 is also coupled to a primary memory 16, such as any commercially available RAM memory. It is also connected to a permanent memory 17, which may be implemented by any commercially available non-volatile electronic, magnetic, magnetooptical, etc memory.

The permanent memory 17 comprises program code 18, that defines a set of program instructions, which when executed by the dataprocessor/controller 15 perform the method according to the invention as well as many other tasks within the mobile telephone 1. The permanent memory 17 also comprises fingerprint reference data 19, which are used by the controller 15, after having assembled a composite fingerprint image, for comparing this image to the fingerprint reference data so as to determine whether or not the owner of the finger 11, i.e. the user of the mobile telephone 1, has the identity represented by the fingerprint reference data 19.

In addition to the above, the dataprocessor/controller 15 is coupled to GSM radio circuitry 20 for implementing the first radiolink 2' through the antenna 2. The dataprocessor/controller 15 is also connected to a Bluetooth radio 21, which in turn is coupled to the Bluetooth antenna 3. Finally, the dataprocessor/controller 15 is connected to the display 5.

All of the components described above, including the dataprocessor/controller 15, may be implemented in many different ways by any commercially available components, which fulfill the functional demands described below. As regards the dataprocessor/controller 15, is may be implemented by any commercially available microprocessor, CPU, DSP, or any other programmable electronic logic device.

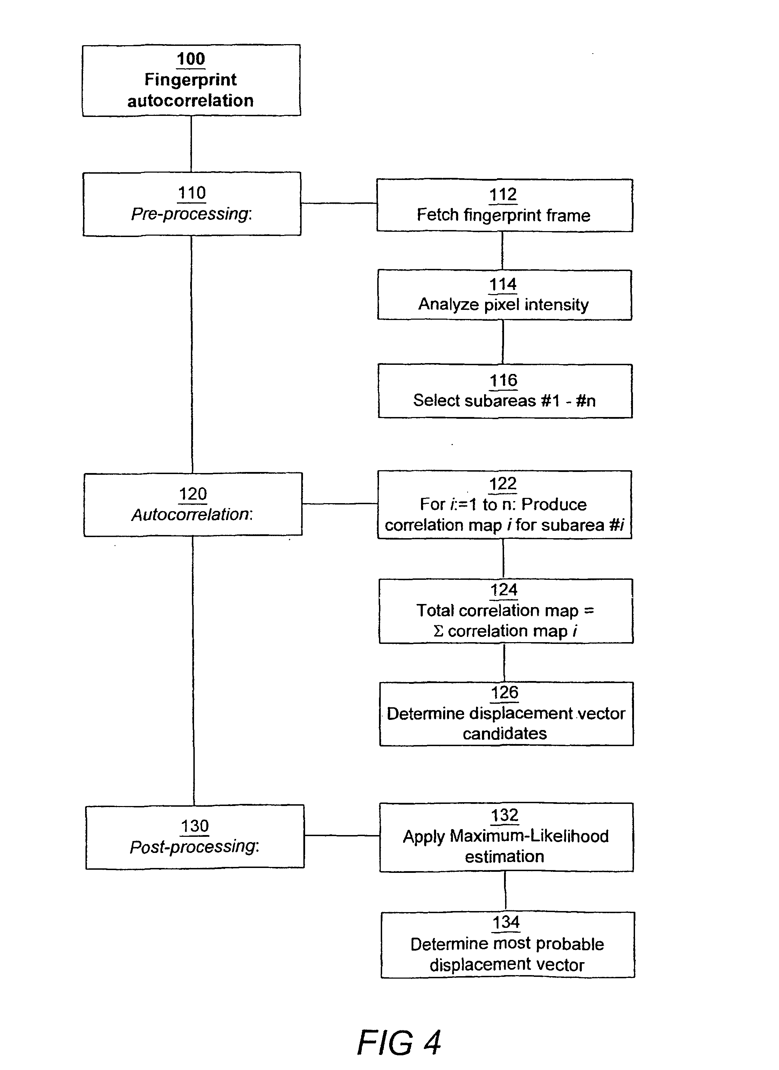

Referring now to the remaining FIGs 4-8, the method and the apparatus according to the preferred embodiment will be described. Generally speaking, the invention is based on the idea of splitting up the image area used for the autocorrelation between successive fingerprint frames into several small subareas. Since, as explained above, the computation scales quadratically with the image area involved, the resulting total computation may be drastically reduced thanks to the invention. Once autocorrelation has been performed for these smaller subareas, and the respestive correlation maps have been produced, a total autocorrelation map is calculated as a linear combination of the correlation maps resulting from the autocorrelations with the individual subareas. The displacement vector between two successive frames is determined from the total autocorrelation map, possibly by applying a Maximum-Likelihood procedure to the total correlation map, if there appears to be more than one displacement vector candidate.

Since the autocorrelation, which is an important part of the process of assembling a plurality of partially overlapping fingerprint frames into a composite fingerprint image, may be made with far less computational power than conventional autocorrelation, the invention allows a small fingerprint sensor to be used in a miniaturized or portable application having a very low power consumption as well as limited computational resources.

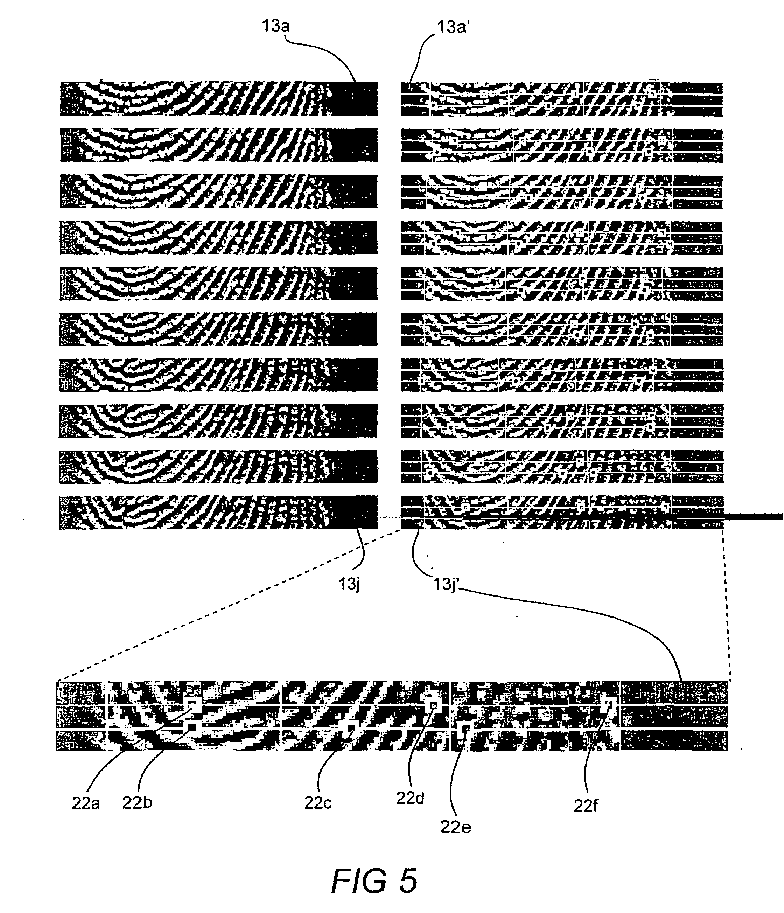

Referring now to FIG 4, a fingerprint autocorrelation routine 100 is illustrated, which is an important part of the method according to the invention. After necessary initialization etc, a first phase or pre-processing phase 110 is entered. In a step 112, a first fingerprint frame is received in the dataprocessor/controller 15 from the fingerprint sensor 10. In a subsequent step 114, the grayscale pixel intensity of the first fingerprint frame is analyzed. A plurality of small and geographically distributed subareas #1-#n are then selected, in a step 116, in the first fingerprint frame, as is illustrated in more detail in FIG 5. The selected subareas are the ones that are statistically uncommon with respect to the image frame as a whole. The reason for this is that it will be easier to autocorrelate the selected subareas with the successive fingerprint frame.

FIG 5 illustrates, in the left hand column, a plurality of successive fingerprint frames 13a, ...13j, as received from the fingerprint sensor 10. Moreover, in the right hand column, the frames 13a-13j are again illustrated (as 13a'-13j'), where the selected uncommon subareas are indicated as the respective centers of small white squares. For each fingerprint frame a total of six uncommon subareas are selected in the preferred embodiment. For the last frame 13j/13j' a magnification is provided at the bottom of FIG 5. From this magnification the selected uncommon subareas 22a, 22b, 22c, 22d, 22e and 22f appear more clearly.

According to the preferred embodiment, each selected subarea has a size of 1x1 pixel, i.e. a single pixel having a grayscale value from e.g. 0-255. Normally, in a fingerprint frame representing a part of a fingerprint, uncommon areas are the ones that either have a very high intensity (i.e. are approximately white) or have a very low intensity (i.e. are approximately black). Therefore, according to the preferred embodiment, the selected subareas are pixels, which preferably are either white (or almost white) or black (or almost black). According to the preferred embodiment, three white pixels and three black pixels are selected as subareas #1-#6 in the fingerprint frame. However, in certain situations (such as image saturation) it may be more appropriate to select other than white or black pixels as uncommon areas. Alternatively, larger uncommon subareas may be selected in the fingerprint frame, such as 4x4 pixels. In such a case, an uncommon area may be an area, which contains an intensity gradient (changing from black to white, or vice versa). Generally speaking, by using a larger size of each subarea, a smaller number of subareas may be used, and vice versa.

Once the uncommon subareas have been selected in step 116, the execution continues to a second phase or autocorrelation phase 120. The purpose of the autocorrelation is to locate the respective subareas selected during the pre-processing of one fingerprint frame in a successive fingerprint frame. Since statistically uncommon pixels are used as subareas, it is likely that just one match will be found in a search area in the successive fingerprint frame. The combined autocorrelation results in at least one displacement vector candidate. A displacement vector represents the relative displacement between a given fingerprint frame and its successor. Once the displacement vector has been determined, the two fingerprint frames may be combined so as to successively assemble the composite fingerprint image.

From a general point of view, autocorrelation coefficients $c_{i,j}$ represent the degree of correlation between neighboring data observations (successive fingerprint frames) in a time series. One autocorrelation, which may be used within the scope of the invention, is

$$c_{i,j} = \Sigma_{x,y}(f(x,y) - g(x + i, y + j))^2$$

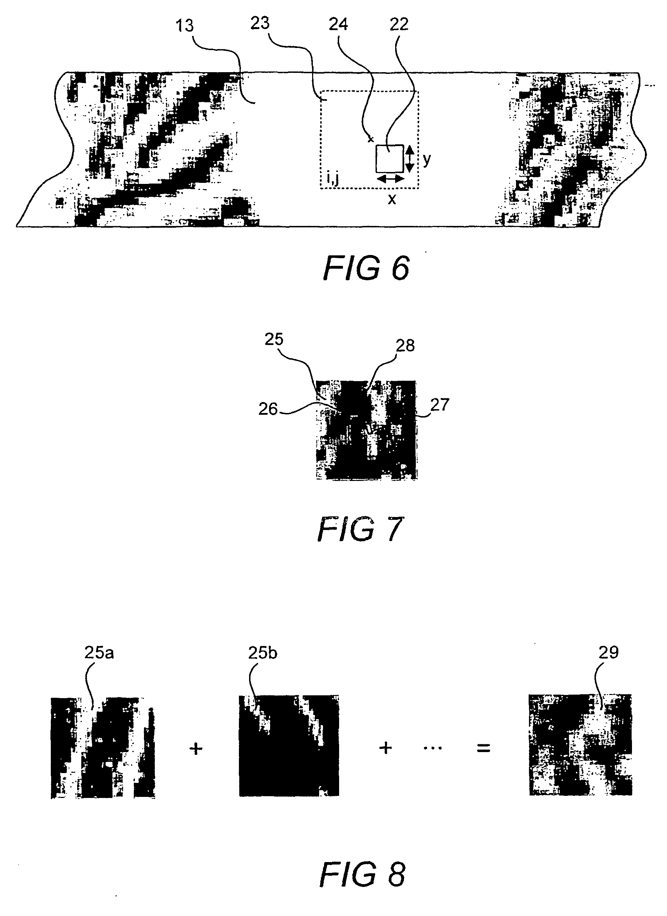

where f(x,y) is a selected subarea in a given fingerprint image and g(x,y) is a subarea in the successive fingerprint frame. The object of the autocorrelation, which is to find the largest correlation between two fingerprint frames, is obtained by calculating $c_{i,j}$ for a search area 23 (FIG 6) in the successive fingerprint frame 13. The best match is found by minimizing $c_{i,j}$ over the search area 23. According to the preferred embodiment, the search area is a 19x19 pixel area. However, other search areas, even non-square ones, are equally possible.

The use of the above autocorrelation is illustrated in FIG 6, where a portion of a successive fingerprint frame 13 is shown. The small square 22 represents one of the selected subareas during the pre-processing. The size of the subarea 22 as well as the search area 23 have been enlarged in FIG 6 for reasons of clarity. The center 24 of the search area 23 of the successive finger print frame represents the position in the preceding fingerprint frame, where the subarea 22 was known to be located. By minimizing $c_{i,j}$ over the search area 23 in the successive fingerprint frame as described above, the location of the subarea 22 in the successive fingerprint frame 13 may be found.

The result of the autocorrelation for an individual subarea 22 with respect to a search area 23 is a 19x19 pixel correlation map 25, which is illustrated in FIG 7. The minimum of the autocorrelation $c_{i,j}$ appears as a dark pixel 28 in the correlation map 25. A displacement vector 26 may then easily be determined, having its starting point in the center 27 of the correlation map 25 and its ending point at the minimum intensity pixel (black pixel) 28.

The above corresponds to step 122 in the flowchart of FIG 4. As already mentioned, in the preferred embodiment, a total of six correlation maps are produced for a total of six subareas 22. In a subsequent step 124, a total correlation map 29 is computed as a linear combination (sum) of the individual correlation maps 25a, 25b, etc, as shown in FIG 8. From the total correlation map 29 it is possible to determine one displacement vector, or often a number of displacement vector candidates.

The reason why, according to the invention, the autocorrelation may be performed for several very small and geographically distributed subareas 22 of successive fingerprint frames 13, which are finally combined into a total correlation map 29, is that a fingerprint image has a characteristic pattern with lines (ridges and valleys) in different directions. These lines will also appear in the correlation maps. If a subarea is shifted along the fingerprint lines, the correlation will be very strong and lines will appear. This is also true, if the subarea is shifted by the width of one line. When the autocorrelation is calculated for parts of the fingerprint, where the lines have different angles, the correlation maps 25 will also exhibit lines in different directions. When a sufficient number of maps 25a, 25b,... are combined, the lines will cross throughout the total correlation map 29, but there will be a clear superposition at the correlation minimum, from which the displacement vector may be determined.

Often, however, several minimum-intensity pixels 28 may appear in a total correlation map 29, thereby indicating not a single displacement vector but a number of displacement vector candidates. These are determined in a subsequent step 126 of the flowchart shown in FIG 4 and are further processed in a post-processing phase 130 of the fingerprint autocorrelation routine 100.

During the post-processing of the total correlation map 29 (or more specifically the number of displacement vector candidates determined in step 126), a Maximum-Likelihood estimating procedure is applied to these displacement candidates, the assumption being that it is probable that the correct minimum for a certain correlation map 29 (as determined for a certain fingerprint frame 13) is close to the minimum in the corresponding correlation map of the preceding fingerprint frame. Consequently, the probability that the minimum has moved from one position to another is proportional to the distance between the minima. If this probability is maximized over time, the most likely displacement path is found.

In more detail, we define a displacement vector as the direction and size of a displacement between two successive fingerprint frames. As already mentioned, the displacement vector appears in a correlation map as a minimum-intensity pixel (black pixel). Moreover, we define a transition probability as the probability of the vector moving from a first position to a second position.

The displacement vector is a function of finger movement and represents finger speed and direction. A vector transition corresponds to an acceleration. Since the finger is a physical body, it cannot have an infinitely large acceleration. Therefore, if the finger movement is sampled at a sufficient rate, the samples will be highly correlated. Because of this correlation, we can calculate the probabilities of the vector moving from one position to another. Therefore, for all positions, we define a corresponding probability of the displacement vector moving from a first position to a second position. Statistical data from real user interaction may be used so as to calculate or "calibrate" the probabilities.

Some simplifications can be made in order to reduce the number of calculations:

- Calculate the probabilities of areas. Map all vectors in an area to one probability.
- Probabilities are proportional to the distance between first and second positions. We can assume that small distances between these two positions are more likely than large distances.

From the above we may define the following algorithm (represented by steps 132 and 134 in FIG 4), which finds the most likely displacement vector, among the number of displacement vector candidates determined in step 126, by maximizing the above probabilities. A search tree is formed of likely vectors, and an initial breadth search is performed. To reduce the number of calculations, only the N most likely paths are used. In an initialization step, we set certain variables equal to 0 for the N paths. Then a loop is iterated, where we find the N most probable displacement vectors in a correlation map. These are used as nodes in the search tree. To rank the displacement vector candidates a metric is calculated for each candidate. The metric is a function of transition probability and correlation quality. For each node at depth t+1, find for each of the predecessors at depth t the sum of the metric of the predecesser and the branch metric of the transition. Determine the maximum of these sums and assign it to this node. Then calculate the sum of the displacement vector and a total displacement of the selected predecessor, and assign it to the node. The node with the largest metric is the estimation of the correct displacement vector.

The fingerprint detection method and apparatus described above may be implemented in many different electronic devices, preferably miniaturized or portable ones. One example is a mobile telephone 1, as illustrated in FIG 1. Other examples involve small hand-held devices to be used as door openers, remote controls, wireless authenticating devices, devices for performing wireless electronic payment, etc.

According to one aspect of the invention, the determined displacement vector may be held to represent a movement of a user's finger in a coordinate system. This allows the method and the apparatus of the invention to be used as a pointing device for controlling the position of a cursor, etc, on a computer-type display.

The invention has been described above with reference to a preferred embodiment. However, other embodiments than the one disclosed above are equally possible within the scope of the invention, as defined by the appended patent claims. In particular, it is observed that the method according to the invention may be applied not only to fingerprints but also to other types of images, which represent a body-specific pattern containing some kind of periodic character.

## Claims

1. A method of generating a composite image (14) from a sequence of partial image frames (13a-x), which represent different but at least partially overlapping areas of a body-specific pattern, wherein displacements between successive image frames are determined so as to combine the image frames correctly when generating the composite image, **characterized in that** the following steps are performed for said sequence of image frames:

   selecting a predetermined number of subareas (22a-f) of a first image frame (13j),
   for each subarea, determining a correlation (25) with a second image frame (13), which succeeds the first image frame,
   calculating a linear combination (29) of the correlations (25a, 25b) for all subareas, and
   determining, from the calculated linear combination, the displacement between the first and second image frames.

2. A method as in claim 1, wherein portions of said first image frame (13j), which are uncommon compared to other portions of the image frame and which moreover are non-adjacent to each other in the image frame, are selected as said subareas (22a-f).

3. A method as in claim 1 or 2, wherein the image frames (13a-x) are grayscale images and wherein the selected subareas (22a-f) have pixel grayscale intensities, which are either essentially white or essentially black.

4. A method as in any of claims 1-3, wherein each subarea contains one pixel only.

5. A method as in claim 4, wherein a total of six subareas (22a-f) are selected, three of them being essentially black and the other three being essentially white.

6. A method as in any preceding claim, wherein the correlation for each subarea (22) of the first image frame (13j) is determined with respect to a search area (23) of the second image frame (13), said search area being larger than said subarea but being smaller than the second image frame as a whole.

7. A method as in claim 6, wherein the search area (23) of the second image frame (13) comprises 19 x 19 pixels.

8. A method as in claim 1, wherein the displacement is determined by first selecting, from the calculated combination, a plurality of displacement candidates and then applying a Maximum-Likelihood estimating procedure to the plurality of displacement candidates, so as to find the most likely displacement.

9. A method as in any preceding claim, wherein said composite image (14) and said sequence of partial image frames (13a-13x) represent a fingerprint.

10. A fingerprint detection apparatus, comprising a fingerprint sensor (10) adapted to produce a sequence of at least partially overlapping fingerprint frames (13), when a finger (11) is moved in relation to the fingerprint sensor, and a processing device (15), which is coupled to the fingerprint sensor and is adapted to produce a complete fingerprint image (14) by computing the relative displacement between respective fingerprint frames and combining the fingerprint frames accordingly, **characterized in that**
the processing device (15) is adapted to determine the relative displacement between a first fingerprint frame (13j) and a second fingerprint frame (13) by: selecting a plurality of subareas (22a-f) in the first fingerprint frame; for each subarea, determining a respective correlation (25) with the second fingerprint frame; computing a linear combination (2a) of the respective correlations (25a, 25b), and determining, from the computed linear combination, the relative displacement.

11. A fingerprint detection apparatus as in claim 10, wherein the processing device (15) furthermore is adapted to select, from the computed linear combination (29), a plurality of displacement candidates and then determine the most likely displacement among these candidates by applying a Maximum-Likelihood estimating procedure.

12. A portable or miniaturized electronic device, comprising a fingerprint detection apparatus according to any of claim 10 or 11.

13. A device according to claim 12 in the form of a mobile telephone (1).

**Patentansprüche**

1. Verfahren zum Erzeugen eines zusammengesetzten Bildes (14) aus einer Sequenz von Teilbildrahmen bzw. -frames (13a-x), die unterschiedliche, aber sich wenigstens teilweise überlagernde Bereiche eines körperspezifischen Musters darstellen, wobei Versätze zwischen aufeinander folgenden Bildrahmen bestimmt werden, um die Bildrahmen richtig zu kombinieren, wenn das zusammengesetzte Bild erzeugt wird, **dadurch gekennzeichnet, dass** die folgenden Schritte für die Sequenz von Bildrahmen durchgeführt werden:

   Auswählen einer vorbestimmten Anzahl von Unterbereichen (22a-f) eines ersten Bildrahmens (13j),

   für jeden Unterbereich Bestimmen einer Korrelation (25) mit einem zweiten Bildrahmen (13), welcher dem ersten Bildrahmen nachfolgt,

   Berechnen einer linearen Kombination (29) aus den Korrelationen (25a, 25b) für alle Unterbereiche, und

   aus der berechneten linearen Kombination Bestimmen des Versatzes zwischen dem ersten und dem zweiten Bildrahmen.

2. Verfahren nach Anspruch 1, wobei Teile des ersten Bildrahmens (13j), die im Vergleich mit anderen Teilen des Bildrahmens ungewöhnlich bzw. selten sind und die darüber hinaus im Bildrahmen nicht benachbart zueinander sind, als die Unterbereiche (22a-f) ausgewählt werden.

3. Verfahren nach Anspruch 1 oder 2, wobei die Bildrahmen (13a-x) Grauskalen-Bilder sind und wobei die ausgewählten Unterbereiche (22a-f) Pixel-Grauskalenintensitäten haben, die entweder im Wesentlichen weiß oder im Wesentlichen schwarz sind.

4. Verfahren nach einem der Ansprüche 1-3, wobei jeder Unterbereich nur ein Pixel enthält.

5. Verfahren nach Anspruch 4, wobei eine Gesamtheit von sechs Unterbereichen (22a-f) ausgewählt wird, wobei drei von ihnen im Wesentlichen schwarz sind und die anderen drei im Wesentlichen weiß sind.

6. Verfahren nach einem der vorangehenden Ansprüche, wobei die Korrelation für jeden Unterbereich (22) des ersten Bildrahmens (13j) in Bezug auf einen Suchbereich (23) des zweiten Bildrahmens (13) bestimmt wird, wobei der Suchbereich größer als der Unterbereich ist, aber kleiner als das zweite Bildrahmen als Ganzes ist.

**7.** Verfahren nach Anspruch 6, wobei der Suchbereich (23) des zweiten Bildrahmens (13) 19 x 19 Pixel aufweist.

**8.** Verfahren nach Anspruch 1, wobei der Versatz zuerst bestimmt wird durch Auswählen aus der berechneten Kombination einer Vielzahl von Versatzkandidaten und dann durch Anwenden einer Prozedur zum Abschätzen einer maximalen Wahrscheinlichkeit auf die Vielzahl von Versatzkandidaten, um den wahrscheinlichsten Versatz zu finden.

**9.** Verfahren nach einem der vorangehenden Ansprüche, wobei das zusammengesetzte Bild (14) und die Sequenz von Teilbildrahmen (13a-13x) einen Fingerabdruck darstellen.

**10.** Fingerabdruck-Erfassungsvorrichtung mit einem Fingerabdrucksensor (10), der zum Erzeugen einer Sequenz von sich wenigstens teilweise überlagernden Fingerabdrucksrahmen (13) geeignet ist, wenn ein Finger (11) in Relation zum Fingerabdrucksensor bewegt wird, und mit einer Verarbeitungsvorrichtung (15), die mit dem Fingerabdrucksensor gekoppelt ist und geeignet ist zum Erzeugen eines vollständigen Fingerabdrucksbilds (14) durch Berechnen des relativen Versatzes zwischen jeweiligen Fingerabdrucksrahmen und durch entsprechendes Kombinieren der Fingerabdrucksrahmen, **dadurch gekennzeichnet, dass** die Verarbeitungsvorrichtung (15) durch folgendes zum Bestimmen des relativen Versatzes zwischen einem ersten Fingerabdrucksrahmen (13j) und einem zweiten Fingerabdrucksrahmen (13) geeignet ist: Auswählen einer Vielzahl von Unterbereichen (22a-f) im ersten Fingerabdrucksrahmen; für jeden Unterbereich Bestimmen einer jeweiligen Korrelation (25) mit dem zweiten Fingerabdrucksrahmen; Berechnen einer linearen Kombination (2a) aus den jeweiligen Korrelationen (25a, 25b) und aus der berechneten linearen Kombination Bestimmen des relativen Versatzes.

**11.** Fingerabdruck-Erfassungsvorrichtung nach Anspruch 10, wobei die Verarbeitungsvorrichtung (15) weiterhin zum Auswählen einer Vielzahl von Versatzkandidaten aus der berechneten linearen Kombination (29) und dann zum Bestimmen des wahrscheinlichsten Versatzes unter diesen Kandidaten durch Anwenden einer Prozedur zum Abschätzen einer maximalen Wahrscheinlichkeit geeignet ist.

**12.** Tragbare oder miniaturisierte elektronische Vorrichtung, die eine Fingerabdruck-Erfassungsvorrichtung gemäß einem der Ansprüche 10 oder 11 aufweist.

**13.** Vorrichtung nach Anspruch 12 in der Form eines Funktelefons (1).

## Revendications

**1.** Procédé de production d'une image composite (14) à partir d'une séquence de trames d'images partielles (13a-x) qui représentent des zones différentes mais se chevauchant au moins partiellement d'un motif spécifique de corps, dans lequel des déplacements entre des trames d'images successives sont déterminés afin de combiner correctement les trames d'images lors de la production de l'image composite, **caractérisé en ce que** les étapes suivantes sont effectuées pour ladite séquence de trames d'images :

    sélection d'un nombre prédéterminé de zones secondaires (22a-f) d'une première trame d'image (13j),
    pour chaque zone secondaire, détermination d'une corrélation (25) avec une seconde trame d'image (13) qui fait suite à la première trame d'image,
    calcul d'une combinaison linéaire (29) des corrélations (25a, 25b) pour toutes les zones secondaires, et
    détermination, à partir de la combinaison linéaire calculée, du déplacement entre les première et seconde trames d'images.

**2.** Procédé selon la revendication 1, dans lequel des parties de ladite première trame d'image (13j) qui ne sont pas communes par comparaison à d'autres parties de la trame d'image et qui, de plus, ne sont pas adjacentes les unes aux autres dans la trame d'image, sont sélectionnées en tant que lesdites zones secondaires (22a-f).

**3.** Procédé selon la revendication 1 ou 2, dans lequel les trames d'images (13a-x) sont des images en niveaux de gris, et dans lequel les zones secondaires sélectionnées (22a-f) ont des intensités de niveaux de gris de pixels qui sont soit pratiquement blanches, soit pratiquement noires.

**4.** Procédé selon l'une quelconque des revendications 1 à 3, dans lequel chaque zone secondaire ne contient qu'un seul pixel.

**5.** Procédé selon la revendication 4, dans lequel un total de six zones secondaires (22a-f) sont sélectionnées, dont trois sont pratiquement noires et dont les trois autres sont pratiquement blanches.

**6.** Procédé selon l'une quelconque des revendications précédentes, dans lequel la corrélation pour chaque zone secondaire (22) de la première trame d'image (13j) est déterminée par rapport à chaque zone secondaire (23) de la seconde trame d'image (13), ladite zone de recherche étant plus grande que ladite zone secondaire mais étant plus petite que la seconde trame d'image dans son ensemble.

7. Procédé selon la revendication 6, dans lequel la zone de recherche (23) de la seconde trame d'image (13) comprend 19 x 19 pixels.

8. Procédé selon la revendication 1, dans lequel le déplacement est déterminé en sélectionnant tout d'abord, à partir de la combinaison calculée, une pluralité de déplacements candidats, puis en appliquant un processus d'estimation par Maximum de Vraisemblance à la pluralité de déplacements candidats, afin de trouver le déplacement le plus vraisemblable.

9. Procédé selon l'une quelconque des revendications précédentes, dans lequel ladite image composite (14) et ladite séquence de trames d'images partielles (13a-13x) représentent une empreinte digitale.

10. Appareil de détection d'empreinte digitale, comprenant un capteur d'empreinte digitale (10) adapté à produire une séquence de trames d'empreintes digitales (13) se chevauchant au moins partiellement, lorsqu'un doigt (11) est déplacé par rapport au capteur d'empreinte digitale, et un dispositif de traitement (15) qui est relié au capteur d'empreinte digitale et est adapté à produire une image d'empreinte digitale (14) complète en calculant le déplacement relatif entre des trames d'empreintes digitales respectives et en combinant de façon correspondante les trames d'empreintes digitales, **caractérisé en ce que**
le dispositif de traitement (15) est adpaté à déterminer le déplacement relatif entre une première trame d'empreinte digitale (13j) et une seconde trame d'empreinte digitale (13) en sélectionnant une pluralité de zones secondaires (22a-f) dans la première trame d'empreinte digitale ; pour chaque zone secondaire, en déterminant une corrélation respective (15) avec la seconde trame d'empreinte digitale ; en calculant une combinaison linéaire (2a) des corrélations respectives (25a, 25b), et en déterminant, à partir de la combinaison linéaire calculée, le déplacement relatif.

11. Appareil de détection d'empreinte digitale selon la revendication 10, dans lequel le dispositif de traitement (15) est en outre adapté à sélectionner, à partir de la combinaison linéaire calculée (29), une pluralité de déplacements candidats puis à déterminer le déplacement le plus vraisemblable parmi ces candidats en appliquant un processus d'estimation par Maximum de Vraisemblance.

12. Dispositif électronique portable ou miniaturisé, comprenant un appareil de détection d'empreinte digitale selon l'une quelconque des revendications 10 ou 11.

13. Dispositif selon la revendication 12, sous la forme d'un téléphone mobile (1).

*Fig 1*

*Fig 2*

*Fig 3*

```
┌─────────────────────┐
│        100          │
│    Fingerprint      │
│   autocorrelation   │
└─────────────────────┘
           │
           │
┌─────────────────────┐          ┌──────────────────────────┐
│        110          │          │           112            │
│   Pre-processing:   │──────────│  Fetch fingerprint frame │
└─────────────────────┘          └──────────────────────────┘
           │                                  │
           │                     ┌──────────────────────────┐
           │                     │           114            │
           │                     │  Analyze pixel intensity │
           │                     └──────────────────────────┘
           │                                  │
           │                     ┌──────────────────────────┐
           │                     │           116            │
           │                     │   Select subareas #1 - #n│
           │                     └──────────────────────────┘
           │
           │
┌─────────────────────┐          ┌──────────────────────────┐
│        120          │          │           122            │
│   Autocorrelation:  │──────────│   For i:=1 to n: Produce │
└─────────────────────┘          │ correlation map i for subarea #i │
           │                     └──────────────────────────┘
           │                                  │
           │                     ┌──────────────────────────┐
           │                     │           124            │
           │                     │   Total correlation map =│
           │                     │     Σ correlation map i  │
           │                     └──────────────────────────┘
           │                                  │
           │                     ┌──────────────────────────┐
           │                     │           126            │
           │                     │ Determine displacement vector │
           │                     │        candidates        │
           │                     └──────────────────────────┘
           │
           │
┌─────────────────────┐          ┌──────────────────────────┐
│        130          │          │           132            │
│   Post-processing:  │──────────│ Apply Maximum-Likelihood │
└─────────────────────┘          │       estimation         │
                                 └──────────────────────────┘
                                              │
                                 ┌──────────────────────────┐
                                 │           134            │
                                 │ Determine most probable  │
                                 │   displacement vector    │
                                 └──────────────────────────┘
```

# FIG 4

EP 1 284 651 B1

FIG 5

13

*FIG 6*

*FIG 7*

*FIG 8*